# EUROPÄISCHE PATENTANMELDUNG

(11) **EP 4 449 842 A1**
(43) Veröffentlichungstag der Anmeldung: **23.10.2024**
(21) Anmeldenummer: 24157293.2
(22) Anmeldetag: 13.02.2024
(51) Int. Cl.: A01B 69/00, G05D 1/00, G05D 109/10

(54) **LANDWIRTSCHAFTLICHE ARBEITSMASCHINE**

(30) Priorität: 19.04.2023 DE 102023109872
(71) Anmelder: CLAAS E-Systems GmbH, 49201 Dissen (DE)
(72) Erfinder: SCHRÖDER, Axel, 33332 Gütersloh (DE); KORTHALS, Timo, 33818 Leopoldshöhe (DE); REDENIUS, Jannik, 32361 Pr. Oldendorf (DE); TÖNIGES, Torben, 33602 Bielefeld (DE); KILDEBY, Allan, 3060 Espergærde (DK); JÜRSCHIK, Peter, 33335 Gütersloh (DE); BONE, Sven, 49124 Georgsmarienhütte (DE); MONKENBUSCH, Robin, 33378 Rheda-Wiedenbrück (DE)
(74) Vertreter: CLAAS Gruppe

(57) **Zusammenfassung**

Die vorliegende Erfindung betrifft eine landwirtschaftliche Arbeitsmaschine (1) zum Einsatz auf einem landwirtschaftlichen Feld (2) mit mehreren Kameras (3, 4, 5, 6, 7, 8, 9) zur Erzeugung mehrere Abbildungen mehrerer Umgebungsbereiche der landwirtschaftlichen Arbeitsmaschine (1).

Die vorliegende Erfindung beruht auf dem allgemeinen Gedanken, dass lediglich eine Recheneinheit (13) die von den Kameras (3, 4, 5, 6, 7, 8, 9) übermittelten Abbildungen auswertet.

## Beschreibung

Die vorliegende Erfindung betrifft eine landwirtschaftliche Arbeitsmaschine zum Einsatz auf einem landwirtschaftlichen Feld, wobei diese landwirtschaftliche Arbeitsmaschine mehreren Kameras aufweist, die zur Erzeugung mehrere Abbildungen mehrerer Umgebungsbereiche der landwirtschaftlichen Arbeitsmaschine ausgebildet sind.

Die US 10,212,400 B2 beschreibt eine autonome landwirtschaftliche Arbeitsmaschine, die ein Steuergerät und ein Bildaufnahmesystem mit mehreren Kameravorrichtungen aufweist, wobei dieses Steuergerät Bilddaten des Bildaufnahmesystems an eine außerhalb der Arbeitsmaschine positionierte Basisstation übermittelt, die einen Monitore bzw. ein Display zur Anzeige dieser Bilddaten aufweist, wohingegen die autonome landwirtschaftliche Arbeitsmaschine an sich das Anzeigen dieser Bilddaten nicht ermöglicht.

Der vorliegenden Erfindung liegt die Aufgabe zugrunde, eine verbesserte landwirtschaftliche Arbeitsmaschine anzugeben, die einen Fahrer, der sich in der landwirtschaftlichen Arbeitsmaschine befindet, während des Betriebs dieser landwirtschaftlichen Arbeitsmaschine noch besser zu unterstützen, wobei lediglich kostengünstigste Kameras eingesetzt werden, sodass die Herstellungskosten dieser landwirtschaftlichen Arbeitsmaschine reduziert werden.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass lediglich eine Recheneinheit die von den Kameras übermittelten Abbildungen auswertet. Mit anderen Worten, die erfindungsgemäße landwirtschaftliche Arbeitsmaschine weist nicht mehr als genau eine Recheneinheit zur Auswertung der von den Kameras übermittelten Abbildungen auf.

Die erfindungsgemäße landwirtschaftliche Arbeitsmaschine ist zum Einsatz auf einem landwirtschaftlichen Feld ausgebildet und weist mehreren Kameras auf, wobei diese Kameras zur Erzeugung mehrerer Abbildungen, insbesondere mehrerer digitaler Abbildungen, mehrerer Umgebungsbereiche der landwirtschaftlichen Arbeitsmaschine ausgebildet sind. Die digitalen Abbildungen bilden digitale Abbildungsdaten aus. Mit anderen Worten, jede dieser Kameras erzeugt jeweils eine Abbildung, insbesondere eine digitale Abbildung, eines realen Umgebungsbereiches der landwirtschaftlichen Arbeitsmaschine. Hierbei kann es vorgesehen sein, dass die Kameras an der landwirtschaftlichen Arbeitsmaschine derart angeordnet sind, dass sie unterschiedliche Umgebungsbereiches der landwirtschaftlichen Arbeitsmaschine als Abbildungen aufnehmen. Es kann es vorgesehen sein, dass sich die von zwei unterschiedlichen Kameras aufgenommen Umgebungsbereiche der landwirtschaftlichen Arbeitsmaschine zumindest teilweise überlappen und/oder überschneiden, jedoch niemals vollständig identisch sind. Die Abbildung einer jeden Kamera kann eine zweidimensionale Abbildung sein. Jede dieser Kameras kann jeweils als optisch-elektronische Einrichtung zur Videoüberwachung und/oder Videoaufzeichnung ausgebildet sein. Eine Videoüberwachung und/oder Videoaufzeichnung kann eine Sequenz von optisch-elektronisch aufgenommen Abbildungen des Umgebungsbereiches der landwirtschaftlichen Arbeitsmaschine umfassen.

Die landwirtschaftliche Arbeitsmaschine weist mindestens einem Monitor bzw. ein Display auf, auf dem einem Fahrer der landwirtschaftlichen Arbeitsmaschine wenigstens eine mittels einer Kameras erzeugte Abbildung darstellt wird. Die landwirtschaftliche Arbeitsmaschine kann mehrere Monitore bzw. Displays aufweisen.

Alle Kameras der landwirtschaftlichen Arbeitsmaschine übermitteln die jeweils ihrerseits erzeugte Abbildung an eine Einstellvorrichtung der landwirtschaftlichen Arbeitsmaschine, wobei die Einstellvorrichtung lediglich eine einzige Recheneinheit aufweist, die dazu vorgesehen und eingerichtet ist, eine Auswertung der von den Kameras übermittelten Abbildungen durchzuführen und eine Darstellung wenigstens einer dieser übermittelten Abbildung auf wenigstens einem Monitor zu initiieren. Diese Auswertung der von den Kameras übermittelten Abbildungen kann in vorteilhafterweise zur Unterstützung des Fahrers der landwirtschaftlichen Arbeitsmaschine eingesetzt werden. Da lediglich eine einzige gemeinsame Recheneinheit eingesetzt wird, werden die Kosten für den Einsatz mehrerer Kameras stark reduziert, da nicht jede einzelne Kamera eine kostentechnisch und einbauraumtechnisch nachteilige eigene Recheneinheit benötigt.

Bei einer vorteilhaften Weiterbildung der erfindungsgemäßen Lösung ist vorgesehen, dass die Einstellvorrichtung dazu vorgesehen und eingerichtet ist, insbesondere dazu ausgebildet und/oder programmiert ist, basierend auf der mittels der Recheneinheit durchgeführten Auswertung der von den Kameras übermittelten Abbildungen wenigstens eine einstellbare Komponente der landwirtschaftlichen Arbeitsmaschine einzustellen, insbesondere zu steuern und/oder zu regeln. Mittels dieser Einstellung einer Komponente der landwirtschaftlichen Arbeitsmaschine durch die Einstellvorrichtung kann der Betriebsmodus und/oder die Arbeitsweise und/oder die Fahrrichtung und/oder die Fahrgeschwindigkeit der landwirtschaftlichen Arbeitsmaschine eingestellt, insbesondere gesteuert und/oder geregelt, werden.

Bei einer vorteilhaften Weiterbildung der erfindungsgemäßen Lösung ist vorgesehen, dass die Recheneinheit dazu vorgesehen und eingerichtet ist, wenigstens eine vordefinierte Funktion zur Auswertung der von den Kameras übermittelten Abbildungen einzusetzen. Eine solche Funktion kann beispielweise zur Erkennung von Hindernissen ausgebildet sein.

Bei einer vorteilhaften Weiterbildung der erfindungsgemäßen Lösung ist vorgesehen, dass die Recheneinheit dazu vorgesehen und eingerichtet ist, mehrere unterschiedliche vordefinierte Funktionen zur Auswertung der von den Kameras übermittelten Abbildungen einzusetzen. Hierbei kann es vorgesehen sein, dass lediglich eine vordefinierte Funktion zur Auswertung eingesetzt wird. Alternativ kann es auch vorgesehen sein, dass mehrere vordefinierte Funktion zur Auswertung zeitlich hintereinander ausgeführt werden, wobei die Recheneinheit diese zeitliche Reihenfolge der vordefinierten Funktion zur Auswertung der von den Kameras übermittelten Abbildungen festlegt, insbesondere in Abhängigkeit vom Betriebszustand der landwirtschaftlichen Arbeitsmaschine und/oder in Abhängigkeit vom Eigenschaften des landwirtschaftlichen Feldes festlegt.

Bei einer vorteilhaften Weiterbildung der erfindungsgemäßen Lösung ist vorgesehen, dass die Recheneinheit dazu vorgesehen und eingerichtet ist, wenigstens eine künstliche Intelligenz zur Auswertung der von den Kameras übermittelten Abbildungen einzusetzen. Eine solche künstliche Intelligenz kann beispielweise zur Erkennung von Hindernissen trainiert sein.

Bei einer vorteilhaften Weiterbildung der erfindungsgemäßen Lösung ist vorgesehen, dass dass die Recheneinheit dazu vorgesehen und eingerichtet ist, mehrere unterschiedliche künstliche Intelligenzen zur Auswertung der von den Kameras übermittelten Abbildungen einzusetzen. Hierbei kann es vorgesehen sein, dass lediglich künstliche Intelligenzen zur Auswertung eingesetzt wird. Alternativ kann es auch vorgesehen sein, dass mehrere künstliche Intelligenzen zur Auswertung zeitlich hintereinander ausgeführt werden, wobei die Recheneinheit diese zeitliche Reihenfolge der künstlichen Intelligenzen zur Auswertung der von den Kameras übermittelten Abbildungen festlegt, insbesondere in Abhängigkeit vom Betriebszustand der landwirtschaftlichen Arbeitsmaschine und/oder in Abhängigkeit vom Eigenschaften des landwirtschaftlichen Feldes festlegt.

Bei einer vorteilhaften Weiterbildung der erfindungsgemäßen Lösung ist vorgesehen, dass die Recheneinheit dazu vorgesehen und eingerichtet ist, eine Reihenfolge der Auswertung der von den Kameras übermittelten Abbildungen in Abhängigkeit von einstellungsbasierten Parametern der landwirtschaftlichen Arbeitsmaschine und/oder in Abhängigkeit von sensorbasierten Betriebsparametern der landwirtschaftlichen Arbeitsmaschine festzulegen. Die landwirtschaftliche Arbeitsmaschine kann einstellungsbasierte Parameter in Form digitaler Betriebsparameter aufweisen. Die landwirtschaftliche Arbeitsmaschine kann Sensoren zur sensorbasierten Erfassung von Betriebsparametern der landwirtschaftlichen Arbeitsmaschine aufweisen, die kommunizierend zur Datenübertragung mit der Recheneinheit verbunden sein können.

Bei einer vorteilhaften Weiterbildung der erfindungsgemäßen Lösung ist vorgesehen, dass die Recheneinheit dazu vorgesehen und eingerichtet ist, eine vordefinierte Funktion und/oder eine künstliche Intelligenz zur Auswertung der von den Kameras übermittelten Abbildungen in Abhängigkeit von einstellungsbasierten Parametern der landwirtschaftlichen Arbeitsmaschine und/oder in Abhängigkeit von sensorbasierten Betriebsparametern der landwirtschaftlichen Arbeitsmaschine auszuwählen. Die landwirtschaftliche Arbeitsmaschine kann einstellungsbasierte Parameter in Form digitaler Betriebsparameter aufweisen. Die landwirtschaftliche Arbeitsmaschine kann Sensoren zur sensorbasierten Erfassung von Betriebsparametern der landwirtschaftlichen Arbeitsmaschine aufweisen, die kommunizierend zur Datenübertragung mit der Recheneinheit verbunden sein können.

Bei einer vorteilhaften Weiterbildung der erfindungsgemäßen Lösung ist vorgesehen, dass die mehreren Kameras derart an der landwirtschaftlichen Arbeitsmaschine positioniert sind, dass die Abbildungen dieser mehreren Kameras einen 360° Rundumblick ermöglichen. Hierdurch wird eine vollständige Erfassung der Umgebung der landwirtschaftlichen Arbeitsmaschine ermöglicht.

Bei einer vorteilhaften Weiterbildung der erfindungsgemäßen Lösung ist vorgesehen, dass die Recheneinheit dazu vorgesehen und eingerichtet ist, zu ermitteln, in den von den Kameras übermittelten Abbildungen ein Nichtfeldbereich, der sich nicht auf das landwirtschaftliche Feld bezieht, vorhanden ist, wobei die Recheneinheit dazu vorgesehen und eingerichtet ist, ermittelte Nichtfeldbereiche in den von den Kameras übermittelten Abbildungen zu anonymisieren.

Die Recheneinheit kann dazu vorgesehen und eingerichtet, insbesondere ausgebildet und/oder programmiert, sein, diesen ermittelten Nichtfeldbereich, insbesondere vor einer Speicherung dieser Abbildungen, zu anonymisieren. Dies hat insbesondere den Vorteil, dass eine Speicherung von personenbezogene Daten verhindert wird, und daher eine Aufnahme und/oder Speicherung der erzeugten Abbildung technisch als auch rechtlich ermöglicht wird.

Die Recheneinheit kann dazu vorgesehen und eingerichtet, insbesondere ausgebildet und/oder programmiert, sein, den ermittelten Nichtfeldbereich mittels einer Maskierung, insbesondere mittels einer einfarbigen Maskierung, zu anonymisieren. Alternativ oder zusätzlich kann die Recheneinheit dazu vorgesehen und eingerichtet, insbesondere ausgebildet und/oder programmiert, sein, den ermittelten Nichtfeldbereich mittels einem Unschärfegenerator zu maskieren.

Bei einer vorteilhaften Weiterbildung der erfindungsgemäßen Lösung ist vorgesehen, dass jede Kamera jeweils als Monokamera ausgebildet ist. Eine Monokamera kann als monokulares System ausgebildet sein, welches eine Kameralinse und einen Bildsensor aufweist.

Bei einer vorteilhaften Weiterbildung der erfindungsgemäßen Lösung ist vorgesehen, dass die landwirtschaftliche Arbeitsmaschine eine selbstfahrende landwirtschaftliche Arbeitsmaschine, insbesondere ein selbstfahrender Mähdrescher oder ein selbstfahrender Feldhäcksler, ist.

Bei einer vorteilhaften Weiterbildung der erfindungsgemäßen Lösung ist vorgesehen, dass die landwirtschaftliche Arbeitsmaschine ein Traktor, insbesondere ein Traktor mit einem Anbaugerät, ist.

Ferner betrifft die Erfindung eine Recheneinheit zur eine Auswertung von Abbildungen, die von allen Kameras der erfindungsmäßen landwirtschaftlichen Arbeitsmaschine erzeugt wurden. Die Kameras und die landwirtschaftliche Arbeitsmaschine können vorangehend und/oder nachfolgend beschriebene Merkmale aufweisen.

Ferner betrifft die Erfindung die Verwendung einer einzigen erfindungsmäßen Recheneinheit in der erfindungsmäßen landwirtschaftlichen Arbeitsmaschine. Die Recheneinheit und die landwirtschaftliche Arbeitsmaschine können vorangehend und/oder nachfolgend beschriebene Merkmale aufweisen.

Weitere wichtige Merkmale und Vorteile der Erfindung ergeben sich aus den Unter-ansprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße landwirtschaftliche Arbeitsmaschine beim Einsatz auf einem landwirtschaftlichen Feld, und
- Fig. 2: eine beispielhafte Verarbeitung von Abbildungen in der erfindungsgemäßen landwirtschaftlichen Arbeitsmaschine.

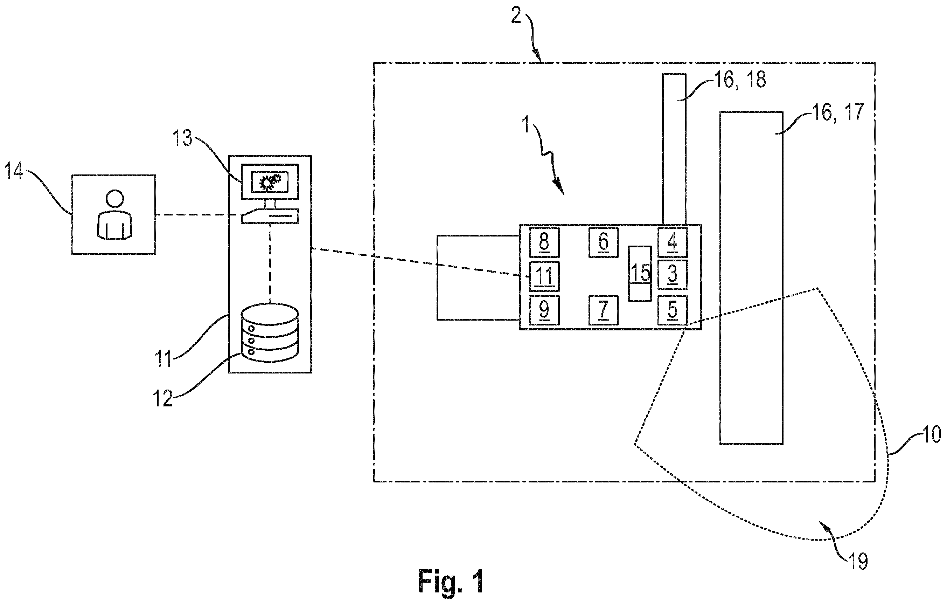

Fig. 1 zeigt eine erfindungsgemäße landwirtschaftliche Arbeitsmaschine 1, die beispielweise als selbstfahrender Mähdrescher ausgebildet ist, während eines landwirtschaftlichen Einsatzes auf einem landwirtschaftlichen Feld 2.

An der landwirtschaftlichen Arbeitsmaschine 1 sind mehrere Kameras 3, 4, 5, 6, 7, 8, 9 angeordnet, wobei in der Fig. 1 lediglich beispielhaft der mittels der Kamera 5 erfasste Umgebungsbereich 10 angedeutet ist. Diese Kameras 3, 4, 5, 6, 7, 8, 9 erzeugen mehrere Abbildungen mehrerer unterschiedlicher Umgebungsbereiche der landwirtschaftlichen Arbeitsmaschine 1. Diese Kameras 3, 4, 5, 6, 7, 8, 9 und/oder noch weitere nicht dargestellte Kameras können derart an der landwirtschaftlichen Arbeitsmaschine 1 positioniert sein, dass die Abbildungen dieser mehreren Kameras 3, 4, 5, 6, 7, 8, 9 einen 360° Rundumblick ermöglichen. Hierdurch wird eine vollständige Erfassung der Umgebung der landwirtschaftlichen Arbeitsmaschine 1 ermöglicht.

Die landwirtschaftlichen Arbeitsmaschine 1 weist mindestens einen Monitor 15 auf, der einem Fahrer 14 der landwirtschaftlichen Arbeitsmaschine 1 wenigstens eine mittels einer Kamera 3, 4, 5, 6, 7, 8, 9 erzeugte Abbildung darstellt. Die landwirtschaftliche Arbeitsmaschine 1 kann mehrere Monitore 15 bzw. Displays aufweisen, um dem Fahrer 14 jeweils die von den Kameras 3, 4, 5, 6, 7, 8, 9 erfassten Videos auf mehreren nicht dargestellten Displays in einer nicht dargestellten Fahrerkabine der landwirtschaftlichen Arbeitsmaschine 1 anzuzeigen.

Alle mittels der Kameras 3, 4, 5, 6, 7, 8, 9 erzeugten Abbildungen werden an eine Einstellvorrichtung 11 der landwirtschaftlichen Arbeitsmaschine 1 übermittelt, wobei diese Einstellvorrichtung 11 lediglich eine Recheneinheit 13 aufweist, die dazu vorgesehen und eingerichtet ist, eine Auswertung der von den Kameras 3, 4, 5, 6, 7, 8, 9 übermittelten Abbildungen durchzuführen und eine Darstellung wenigstens einer dieser übermittelten Abbildung auf wenigstens einem Monitor 15 innerhalb der landwirtschaftlichen Arbeitsmaschine 1 zu initiieren.

Die Recheneinheit 13 ist dazu vorgesehen und eingerichtet, eine vordefinierte Funktion und/oder eine künstliche Intelligenz zur Auswertung der von den Kameras 3, 4, 5, 6, 7, 8, 9 übermittelten Abbildungen in Abhängigkeit von einstellungsbasierten Parametern der landwirtschaftlichen Arbeitsmaschine 1 und/oder in Abhängigkeit von sensorbasierten Betriebsparametern der landwirtschaftlichen Arbeitsmaschine 1 auszuwählen.

Die landwirtschaftliche Arbeitsmaschine 1 kann einstellungsbasierte Parameter in Form digitaler Betriebsparameter aufweisen. Ferner kann die landwirtschaftliche Arbeitsmaschine nicht dargestellte Sensoren zur sensorbasierten Erfassung von Betriebsparametern der landwirtschaftlichen Arbeitsmaschine 1 aufweisen, die kommunizierend zur Datenübertragung mit der Recheneinheit 13 verbunden sein können.

Die Einstellvorrichtung 11 ist dazu vorgesehen und eingerichtet, basierend auf der mittels der Recheneinheit 13 durchgeführten Auswertung der von den Kameras 3, 4, 5, 6, 7, 8, 9 übermittelten Abbildungen wenigstens eine einstellbare Komponente 16 der landwirtschaftlichen Arbeitsmaschine 1 einzustellen. Diese einstellbare Komponente 16 kann beispielsweise eine Überladevorrichtung 18 der landwirtschaftlichen Arbeitsmaschine 1 und/oder ein Erntevorsatzgerät 17 der landwirtschaftlichen Arbeitsmaschine 1 sein.

Die Recheneinheit 13 kann dazu vorgesehen und eingerichtet sein, eine Reihenfolge der Auswertung der von den Kameras 3, 4, 5, 6, 7, 8, 9 übermittelten Abbildungen in Abhängigkeit von einstellungsbasierten Parametern der landwirtschaftlichen Arbeitsmaschine 1 und/oder in Abhängigkeit von sensorbasierten Betriebsparametern der landwirtschaftlichen Arbeitsmaschine 1 festzulegen.

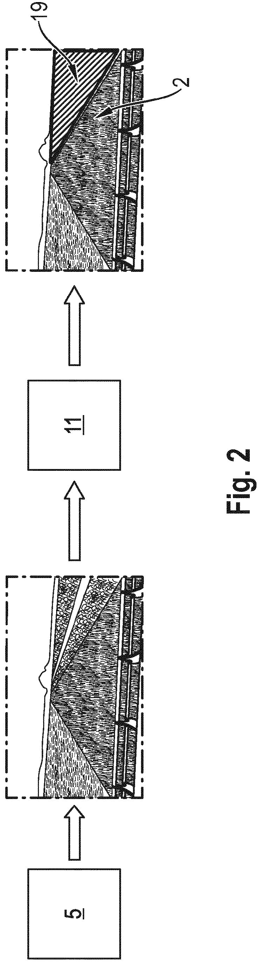

Die Recheneinheit 13 kann dazu vorgesehen und eingerichtet sein, zu ermitteln, ob in den von den Kameras 3, 4, 5, 6, 7, 8, 9 übermittelten Abbildungen ein Nichtfeldbereich 19, der sich nicht auf das landwirtschaftliche Feld 2 bezieht bzw. außerhalb des landwirtschaftlichen Feldes 2 liegt, vorhanden ist, wobei die Recheneinheit 13 dazu vorgesehen und eingerichtet ist, ermittelte Nichtfeldbereiche 19 in den von den Kameras 3, 4, 5, 6, 7, 8, 9 übermittelten Abbildungen zu anonymisieren, wie es in der Fig. 2 beispielhaft für die Kamera 5 angedeutet ist. Die Recheneinheit 13 kann insbesondere dazu vorgesehen und eingerichtet sein, diesen ermittelten Nichtfeldbereich 19 vor einer Speicherung dieser Abbildungen in einem Datenspeicher 12 zu anonymisieren. Dies hat insbesondere den Vorteil, dass eine Speicherung von personenbezogene Daten verhindert wird, und daher eine Aufnahme und/oder Speicherung der erzeugten Abbildung technisch als auch rechtlich sichergestellt wird. Die Recheneinheit 13 kann dazu vorgesehen und eingerichtet sein, den ermittelten Nichtfeldbereich 19 mittels einer Maskierung, insbesondere mittels einer einfarbigen Maskierung, zu anonymisieren. Alternativ oder zusätzlich kann die Recheneinheit dazu vorgesehen und eingerichtet sein, den ermittelten Nichtfeldbereich mittels einem Unschärfegenerator zu maskieren.

### Bezugszeichenliste

- 1: Landwirtschaftliche Arbeitsmaschine
- 2: Landwirtschaftliches Feld
- 3: Kamera
- 4: Kamera
- 5: Kamera
- 6: Kamera
- 7: Kamera
- 8: Kamera
- 9: Kamera
- 10: beispielhafter Umgebungsbereich der Kamera 5
- 11: Einstellvorrichtung
- 12: Datenspeicher
- 13: Recheneinheit
- 14: Fahrer
- 15: Monitor
- 16: Komponente
- 17: Erntevorsatzgerät
- 18: Überladevorrichtung
- 19: Nichtfeldbereich

## Patentansprüche

1. Landwirtschaftliche Arbeitsmaschine (1) zum Einsatz auf einem landwirtschaftlichen Feld (2),
- mit mehreren Kameras (3, 4, 5, 6, 7, 8, 9) zur Erzeugung mehrerer Abbildungen mehrerer Umgebungsbereiche der landwirtschaftlichen Arbeitsmaschine (1),
- mit mindestens einem Monitor (15), der einem Fahrer (14) der landwirtschaftlichen Arbeitsmaschine (1) wenigstens eine mittels einer Kamera (3, 4, 5, 6, 7, 8, 9) erzeugte Abbildung darstellt,
**dadurch gekennzeichnet,**
- **dass** alle Kameras (3, 4, 5, 6, 7, 8, 9) die erzeugten Abbildungen an eine Einstellvorrichtung (11) der landwirtschaftlichen Arbeitsmaschine (1) übermitteln,
- wobei die Einstellvorrichtung (11) lediglich eine Recheneinheit (13) aufweist, die dazu vorgesehen und eingerichtet ist, eine Auswertung der von den Kameras (3, 4, 5, 6, 7, 8, 9) übermittelten Abbildungen durchzuführen und eine Darstellung wenigstens einer dieser übermittelten Abbildung auf wenigstens einem Monitor (15) zu initiieren.

2. Landwirtschaftliche Arbeitsmaschine (1) nach Anspruch 1,
**dadurch gekennzeichnet,**
**dass** die Einstellvorrichtung (11) dazu vorgesehen und eingerichtet ist, basierend auf der mittels der Recheneinheit (13) durchgeführten Auswertung der von den Kameras (3, 4, 5, 6, 7, 8, 9) übermittelten Abbildungen wenigstens eine einstellbare Komponente (16) der landwirtschaftlichen Arbeitsmaschine (1) einzustellen.

3. Landwirtschaftliche Arbeitsmaschine (1) nach Anspruch 1 oder 2,
**dadurch gekennzeichnet,**
**dass** die Recheneinheit (13) dazu vorgesehen und eingerichtet ist, wenigstens eine vordefinierte Funktion zur Auswertung der von den Kameras (3, 4, 5, 6, 7, 8, 9) übermittelten Abbildungen einzusetzen.

4. Landwirtschaftliche Arbeitsmaschine (1) nach einem der vorhergehenden Ansprüche,
**dadurch gekennzeichnet,**
**dass** die Recheneinheit (13) dazu vorgesehen und eingerichtet ist, mehrere unterschiedliche vordefinierte Funktionen zur Auswertung der von den Kameras (3, 4, 5, 6, 7, 8, 9) übermittelten Abbildungen einzusetzen.

5. Landwirtschaftliche Arbeitsmaschine (1) nach einem der vorhergehenden Ansprüche,
**dadurch gekennzeichnet,**
**dass** die Recheneinheit (13) dazu vorgesehen und eingerichtet ist, wenigstens eine künstliche Intelligenz zur Auswertung der von den Kameras (3, 4, 5, 6, 7, 8, 9) übermittelten Abbildungen einzusetzen.

6. Landwirtschaftliche Arbeitsmaschine (1) nach einem der vorhergehenden Ansprüche,
**dadurch gekennzeichnet,**
**dass** die Recheneinheit (13) dazu vorgesehen und eingerichtet ist, mehrere unterschiedliche künstliche Intelligenzen zur Auswertung der von den Kameras (3, 4, 5, 6, 7, 8, 9) übermittelten Abbildungen einzusetzen.

7. Landwirtschaftliche Arbeitsmaschine (1) nach einem der vorhergehenden Ansprüche,
**dadurch gekennzeichnet,**
**dass** die Recheneinheit (13) dazu vorgesehen und eingerichtet ist, eine Reihenfolge der Auswertung der von den Kameras (3, 4, 5, 6, 7, 8, 9) übermittelten Abbildungen in Abhängigkeit von einstellungsbasierten Parametern der landwirtschaftlichen Arbeitsmaschine (1) und/oder in Abhängigkeit von sensorbasierten Betriebsparametern der landwirtschaftlichen Arbeitsmaschine (1) festzulegen.

8. Landwirtschaftliche Arbeitsmaschine (1) nach einem der vorhergehenden Ansprüche,
**dadurch gekennzeichnet,**
**dass** die Recheneinheit (13) dazu vorgesehen und eingerichtet ist, eine vordefinierte Funktion und/oder eine künstliche Intelligenz zur Auswertung der von den Kameras (3, 4, 5, 6, 7, 8, 9) übermittelten Abbildungen in Abhängigkeit von einstellungsbasierten Parametern der landwirtschaftlichen Arbeitsmaschine (1) und/oder in Abhängigkeit von sensorbasierten Betriebsparametern der landwirtschaftlichen Arbeitsmaschine (1) auszuwählen.

9. Landwirtschaftliche Arbeitsmaschine (1) nach einem der vorhergehenden Ansprüche,
**dadurch gekennzeichnet,**
**dass** die mehreren Kameras (3, 4, 5, 6, 7, 8, 9) derart an der landwirtschaftlichen Arbeitsmaschine (1) positioniert sind, dass die Abbildungen dieser mehreren Kameras (3, 4, 5, 6, 7, 8, 9) einen 360° Rundumblick ermöglichen.

10. Landwirtschaftliche Arbeitsmaschine (1) nach einem der vorhergehenden Ansprüche,
**dadurch gekennzeichnet,**
- **dass** die Recheneinheit (13) dazu vorgesehen und eingerichtet ist, zu ermitteln, in den von den Kameras (3, 4, 5, 6, 7, 8, 9) übermittelten Abbildungen ein Nichtfeldbereich, der sich nicht auf das landwirtschaftliche Feld (2) bezieht, vorhanden ist,
- wobei die Recheneinheit (13) dazu vorgesehen und eingerichtet ist, ermittelte Nichtfeldbereiche in den von den Kameras (3, 4, 5, 6, 7, 8, 9) übermittelten Abbildungen zu anonymisieren.

11. Landwirtschaftliche Arbeitsmaschine (1) nach einem der vorhergehenden Ansprüche,
**dadurch gekennzeichnet,**
**dass** jede Kamera (3, 4, 5, 6, 7, 8, 9) jeweils als Monokamera ausgebildet ist.

12. Landwirtschaftliche Arbeitsmaschine (1) nach einem der vorhergehenden Ansprüche,
**dadurch gekennzeichnet,**
**dass** die landwirtschaftliche Arbeitsmaschine (1) eine selbstfahrende landwirtschaftliche Arbeitsmaschine (1), insbesondere ein selbstfahrender Mähdrescher oder ein selbstfahrender Feldhäcksler, ist.

13. Landwirtschaftliche Arbeitsmaschine (1) nach einem der Ansprüche 1 bis 12,
**dadurch gekennzeichnet,**
**dass** die landwirtschaftliche Arbeitsmaschine (1) ein Traktor ist.

14. Recheneinheit (13) zur eine Auswertung von Abbildungen, die von allen Kameras (3, 4, 5, 6, 7, 8, 9) der landwirtschaftlichen Arbeitsmaschine (1) nach einem der vorhergehenden Ansprüche erzeugt wurden.

15. Verwendung einer einzigen Recheneinheit (13) gemäß dem Anspruch 14 in der landwirtschaftlichen Arbeitsmaschine (1) nach einem der Ansprüche 1 bis 13.
